# EUROPÄISCHE PATENTSCHRIFT

(11) **EP 3 827 123 B1**
(45) Veröffentlichungstag und Bekanntmachung des Hinweises auf die Patenterteilung: **13.08.2025**
(21) Anmeldenummer: 19733751.2
(22) Anmeldetag: 25.06.2019
(51) Int. Cl.: D06C 15/00, D06C 15/02

(54) **VERFAHREN ZUR BEHANDLUNG EINER TEXTILEN WARENBAHN UND VORRICHTUNG ZUR BEHANDLUNG EINER TEXTILEN WARENBAHN**
METHOD FOR TREATING A TEXTILE MATERIAL WEB AND APPARATUS FOR TREATING A TEXTILE MATERIAL WEB
PROCÉDÉ DE TRAITEMENT D'UNE NAPPE DE TISSU ET DISPOSITIF DE TRAITEMENT D'UNE NAPPE DE TISSU

(30) Priorität: 26.07.2018 DE 102018118096
(43) Veröffentlichungstag der Anmeldung: 02.06.2021
(73) Patentinhaber: Andritz Küsters GmbH, 47805 Krefeld (DE)
(72) Erfinder: JUNG, Christian, 47918 Tönisvorst (DE); LOEST, Pascal, 47058 Duisburg (DE)
(74) Vertreter: Kluin Patent
(86) Internationale Anmeldenummer: PCT/EP2019/066826
(87) Internationale Veröffentlichungsnummer: WO 2020/020557

(56) Entgegenhaltungen:
- EP-A1- 2 586 664
- EP-A1- 2 876 205
- WO-A1-2018/204154
- CN-A- 1 306 106
- CN-A- 107 938 233
- CN-B- 104 153 153
- KR-B1- 100 732 693
- KR-B1- 100 943 290
- US-B2- 7 514 030

## Beschreibung

Die Erfindung betrifft ein Verfahren zur Behandlung einer textilen Warenbahn, insbesondere einer zur Bildung eines Airbags geeigneten Gewebe-Warenbahn, zum Reduzieren der Gas- oder Luftdurchlässigkeit der Warenbahn, insbesondere in Richtung der Warendicke, bei dem die eine flächig ausgebildete erste Seite und eine gegenüberliegende flächig ausgebildete zweite Seite umfassende Warenbahn in einer Vorlaufrichtung transportiert und durch zumindest einen von einer Behandlungswalze und einem als Gegenwalze ausgebildeten Gegenwerkzeug gebildeten Behandlungsspalt geführt wird. Ferner betrifft die Erfindung eine Vorrichtung zur Behandlung einer textilen Warenbahn in einer Vorlaufrichtung zum Reduzieren der Gasdurchlässigkeit der Warenbahn insbesondere in Richtung der Warendicke.

Es sind verschiedene solcher Verfahren zur üblicherweise kontinuierlichen Behandlung einer Warenbahn bekannt, insbesondere auch solche zur Herstellung eines zur Anwendung als oder an einem Airbag geeigneten Gewebes. Unter einer solchen Anwendung ist insbesondere die Verwendung des Gewebes für oder als ein Aufprallkissen oder Gassack einer Airbag-Einheit bzw. eines Airbag-Sicherheitssystems zu verstehen. Die Warenbahn kann dabei das Gewebematerial für eine Vielzahl solcher Aufprallkissen umfassen, wobei das Gewebe bzw. die Warenbahn in der Regel aus miteinander verbundenen synthetischen Fasern besteht.

In dem Behandlungsspalt wird bevorzugt im Wesentlichen eine Linienkraft auf das durch den Spalt geführte Gewebe ausgeübt. Dazu ist das Gegenwerkzeug als eine Gegenwalze ausgebildet. Die Gegenwalze kann folglich mit der Behandlungswalze den Behandlungsspalt, oder auch Nip genannt, bilden. Es sollte deutlich sein, dass vorliegend unter der flächig ausgebildeten Seite eine Flachseite der Warenbahn, insbesondere eine Oberfläche dieser Seite, zu verstehen ist. Die flächig ausgebildete Seite kann insbesondere eine Ober- oder Unterseite der Warenbahn bilden. Ferner ist unter der Richtung der Warendicke eine Dickenrichtung der Warenbahn, das heißt die Richtung im Wesentlichen senkrecht zu zumindest einer von den beiden flächig ausgebildeten Seiten der Warenbahn aufgespannten Ebene, insbesondere im Wesentlichen senkrecht zu einer Oberseite und einer Unterseite der Warenbahn, zu verstehen.

Ein für die Anwendung als Airbag entscheidendes Kriterium des Gewebes ist - neben einer relativ hohen Reißfestigkeit - dessen Luft- bzw. Gasdurchlässigkeit. Insbesondere bei den heutzutage vermehrt verbauten Seiten- oder Fußgänger-Airbags eines Fahrzeugs, bei denen ein relativ großflächiger Gassack in sehr kurzer Zeit explosionsartig aufgeblasen wird, spielt die Gasdurchlässigkeit des Airbag-Gewebes eine wesentliche Rolle. Insbesondere ergibt sich die Notwendigkeit, die Gasdurchlässigkeit unter Hochdruckbedingungen in größerem Maße zu unterdrücken als bei bekannten Standard-Airbags. So muss auch bei solchen großflächigen Airbags der Gassack zumindest für den ersten Moment nach einem Auslösen der Airbag-Einheit und Befüllen des Gassacks mit einem Gas relativ gasundurchlässig ausgestaltet sein, um das Gas zumindest bis zum Eintauchen eines Körperteils einer Person in den Airbag halten zu können.

Zur Herstellung eines Gewebes mit geringer Gasdurchlässigkeit, insbesondere zur Verwendung als Airbag, wird in bekannten Verfahren ein an sich ebenfalls bekanntes, insbesondere reißfestes Gewebe in der Regel vollflächig mit Silikon beschichtet, beispielsweise mittels einer üblichen Beschichtungsanlage. Das Gewebe weist dazu üblicherweise ein Flächengewicht von 100 bis 500 g/m², bevorzugt von 150 bis 250 g/m², auf. Das Silikon verschließt die Poren des Gewebes und bewirkt dadurch eine deutliche Reduzierung der Gasdurchlässigkeit auf nahezu null. Anschließend können weitere optionale Behandlungsschritte, wie eine Trocknung des Gewebes in einer Trocknungsanlage erfolgen.

Aus der EP 2 199 062 A1 ist beispielsweise ein Verfahren zur Herstellung eines mit Silikon beschichteten Gewebes für Airbags bekannt. Das Verfahren sieht vor, dass zunächst an einer der flächig ausgebildeten Seiten des Gewebes eine Silikonschicht appliziert wird, das Gewebe sodann in einen Trocknungsofen geführt und darin mittels zwei Kalanderwalzen druckbehandelt wird.

Ferner ist aus der EP 2 586 664 A1 ein Verfahren zur Behandlung eines Airbag-Gewebes bekannt, bei dem das Gewebe vor einem Auftragen einer Kunstharz-Beschichtung mit Wasser besprüht wird, so dass das Kunstharz lediglich an Kreuzungspunkten haftet und insbesondere nicht in tiefere Schichten des Gewebes eindringt.

Die Druckschrift EP 2 876 205 A1 offenbart einen Multi-Roll-Kalander zum Kalandrieren von Papier. Der Kalander weist temperierte Walzen und Vorrichtungen zum Durchfeuchten der Warenbahn auf.

Nachteilig sind jedoch die relativ hohen Kosten für das Rohmaterial, wie Silikon, das durch die Beschichtung entstehende relativ hohe Gewicht des Gewebes sowie die durch die Beschichtung bedingte relativ hohe Formsteifigkeit und dadurch resultierende schwierige Faltbarkeit zum Verpacken und Integrieren des Gewebes in andere Bauteile, wie beispielsweise als Gassack in ein Lenkrad oder einen Karosserieholm eines Fahrzeugs. Ferner können durch den erforderlichen Reinigungsaufwand der Behandlungsanlage die Betriebskosten einer solchen Vorrichtung relativ hoch sein.

Aus der DE 690 16 007 T2 ist ein Herstellungsverfahren für ein Airbaggewebe bekannt, in dem ein unbeschichteter, gewebter Stoff vorgesehen und auf beiden Seiten kalandriert wird. Nachteilig ist bei dem mit diesem Herstellungsverfahren erzeugten Gewebe, dass es hinsichtlich seiner Gasdurchlässigkeit verbesserungsfähig ist.

Die Druckschrift KR 100 943 290 B1 offenbart ein Verfahren und eine Vorrichtung zur Herstellung eines Gewebes mit natürlicher Ledertextur. Hierbei wird eine Warenbahn auf einer Seite mit Wasser beaufschlagt und durchläuft anschließend einen Walzenspalt, indem die Warenbahn wärmebehandelt wird. Aus der nachveröffentlichten Druckschrift WO 2018 204 154 A1 ist ein Verfahren zur Reduzierung der Gasdurchlässigkeit eines Gewebes bekannt, bei dem eine Warenbahn mit Wasser beaufschlagt und anschließend in einem Walzenspalt druck- und wärmebehandelt wird.

Aufgabe der vorliegenden Erfindung ist es daher, ein Verfahren zur Behandlung einer textilen Warenbahn für eine Anwendung als Airbag bereitzustellen, welches zumindest einen der oben genannten Nachteile verbessert, und insbesondere kostengünstig betreibbar und hinsichtlich des Gewichts und der Faltbarkeit des Endprodukts verbessert ist. Ferner soll eine Vorrichtung zur Durchführung eines solchen Verfahrens bereitgestellt werden.

Die Erfindung löst die gestellte Aufgabe durch ein Verfahren mit den Merkmalen des Hauptanspruchs sowie durch eine Vorrichtung mit den Merkmalen des Anspruchs 7. Vorteilhafte Ausgestaltungen und Weiterbildungen der Erfindung sind in den Unteransprüchen, der Beschreibung sowie den Figuren offenbart.

Überraschenderweise hat sich gezeigt, dass durch das Applizieren von Wasser die Gasdurchlässigkeit des Gewebes nach dem Kalandrieren im Vergleich zum trockenen Kalandrieren des Gewebes verbessert ist. Ferner hat sich gezeigt, dass durch das Applizieren von Wasser anstelle von Silikon die Faltbarkeit eines mit dem erfindungsgemäßen Verfahren hergestellten Gewebes im Vergleich zu einem Gewebe mit Silikonbeschichtung deutlich verbessert ist.

Das Applizieren bzw. Aufbringen von Wasser kann grundsätzlich auf beliebige Weise erfolgen. Beispielhaft seien hierzu Gießen, Tauchen, Rakeln, Pflatschen oder Sprühen, beispielsweise mittels einer an sich bekannten Sprüheinrichtung bzw. Befeuchtungseinrichtung, insbesondere über eine oder mehrere Sprüh- oder Nebeldüsen, genannt. Bevorzugt wird das Wasser auf die zumindest eine Seite der Warenbahn besprüht, besonders bevorzugt mittels eines oder mehrerer Rotorenbefeuchter.

Erfindungsgemäß wird vor dem Passieren bzw. Durchlaufen eines Behandlungsspalts zum Kalandrieren Wasser an genau einer der beiden flächig ausgebildeten Seiten der Warenbahn appliziert.

In einer Ausführungsform wird das Wasser so appliziert, dass es von der applizierten Seite durch das Gewebe zu der nicht-applizierten Seite hindurch dringt. Bevorzugt durchnässt die Warenbahn hierbei gleichmäßig.

In einer anderen Ausführungsform wird das Wasser so appliziert, dass es nicht von der applizierten Seite durch das Gewebe zu der nicht-applizierten Seite hindurch dringt.

Das Wasser kann einfach oder stattdessen auch mehrfach aufgetragen werden. Der mehrfache Auftrag kann in der Ausführungsform, in der das Wasser so appliziert wird, dass es nicht von der applizierten Seite durch das Gewebe zu der nicht-applizierten Seite hindurch dringt, mehrfach von einer Seite erfolgen.

Der mehrfache Auftrag kann in der Ausführungsform, in der das Wasser so appliziert wird, dass es die Warenbahn gleichmäßig durchnässt, mehrfach von einer beliebigen Seite erfolgen.

Der mehrfache Auftrag kann notwendig werden, wenn mit einem einfachen Auftrag nicht genügend Wasser aufgetragen werden kann.

Als Wasser kann beispielsweise übliches Leitungswasser, insbesondere Trinkwasser, oder eine wässrige Lösung, beispielsweise versetzt mit geeigneten Additiven, wie beispielsweise ein Benetzungsmittel, verwendet werden.

Durch die Anwendung von Wasser als Applikations- bzw. Befeuchtungsmittel ist zudem ein besonders kostengünstiges und umweltfreundliches Behandeln der Warenbahn ermöglicht. Ferner ist der Aufwand zum Reinigen der Vorrichtung minimiert. Das durch dieses Verfahren hergestellte Endprodukt, nämlich ein Gewebe, welches für die Anwendung als Airbag geeignet ist, lässt sich zudem leicht falten und ist dadurch unkompliziert und mit relativ wenig Kraftaufwand verpackbar. Auch kann eine im Vergleich zum trockenen Kalandrierprozess höhere Produktionsgeschwindigkeit erzielt werden.

Erfindungsgemäß wird vor dem Passieren des Behandlungsspalts nur auf eine der beiden flächig ausgebildeten Seiten der Warenbahn Wasser appliziert. Es hat sich gezeigt, dass bereits hierdurch eine Reduzierung der Gasdurchlässigkeit in Dickenrichtung des Gewebes erreicht werden kann. Es sollte deutlich sein, dass bei einem einseitigen Applizieren von Wasser bzw. einem Wasserapplizieren an einer Seite der Warenbahn das Wasser ausschließlich an dieser einen Seite auf die Warenbahn aufgebracht wird.

Die erfindungsgemäß vorgesehene Druck- und zumindest einseitige Temperaturbehandlung der Warenbahn kann in Kombination mit der zuvor erläuterten Wasserapplikation eine besonders deutliche Reduzierung der Gasdurchlässigkeit des Gewebes, insbesondere in Dickenrichtung, bewirken. Insbesondere ist die Gasdurchlässigkeit des Gewebes nach dem Kalandrieren durch das vorherige Applizieren von Wasser im Vergleich zum trockenen Kalandrieren des Gewebes erheblich verbessert. So kann durch ein zumindest einseitiges Applizieren von Wasser sowie ein anschließendes, insbesondere "schlagartiges" Verdampfen des Wassers unter Druck und Temperatur im Behandlungsspalt das Gewebe zunehmend verdichtet und dadurch Gewebeporen geschlossen werden, das heißt die Gasdurchlässigkeit des Gewebes verringert werden.

Insbesondere hat sich überraschenderweise gezeigt, dass der sich nach einer Applikation von Wasser im Behandlungsspalt spontan bildende Wasserdampf in Verbindung mit dem auf der Faseroberfläche anhaftenden Wasserfilm ein Gleiten oder Verschieben der Fasern zueinander und somit ein zumindest teilweises Verschließen von Faserzwischenräumen bewirkt, so dass insbesondere ein Verdichtungsprozess zwischen den Fasern stattfindet. Zudem kann der gebildete Wasserdampf thermische Energie der Heizwalze bis in das Gewebeinnere übertragen und somit dazu beitragen, dass die Glasumwandlungstemperatur der synthetischen Fasern kurzzeitig überschritten wird. Bei einem anschließenden Abkühlen werden die durch das Faser-Gleiten zumindest bereichsweise übereinander liegenden, das heißt in Dickenrichtung teilweise überlappend angeordneten - und durch die gleichzeitige Druckbehandlung bevorzugt teilweise flachgedrückten - Fasern in dieser, insbesondere die Faserzwischenräume verschließenden Anordnung relativ zueinander und/oder in ihrer teilweise flach gedrückten Form fixiert, so dass die Gasdurchlässigkeit des Gewebes reduziert ist.

Bevorzugt wird die Warenbahn nach dem Applizieren von Wasser nur an einer der beiden flächig ausgebildeten Seiten, insbesondere an der mit Wasser applizierten Seite, temperaturbehandelt, vorzugsweise während der Druckbehandlung der Warenbahn. Es hat sich gezeigt, dass bereits durch eine derartige Temperatur- und Druckbehandlung eine Reduzierung der Gasdurchlässigkeit in Dickenrichtung des Gewebes erreicht werden kann.

Zur Temperaturbehandlung ist die Warenbahn bevorzugt aus synthetischen Fasern oder einer Mischung aus synthetischen Fasern mit Naturfasern gebildet. Es sollte deutlich sein, dass vorliegend unter der Temperaturbehandlung die Zufuhr von Wärme zu verstehen ist. Dies kann grundsätzlich an einer oder beiden flächig ausgebildeten Seiten der Warenbahn erfolgen, insbesondere mittels der Behandlungswalze und/oder dem Gegenwerkzeug. Bei einer einseitigen Temperaturbehandlung bzw. einer Temperaturbehandlung an einer Seite der Warenbahn wird die Wärme bevorzugt ausschließlich an dieser einen Seite auf die Warenbahn aufgebracht. Selbstverständlich kann die Wärme hierbei von der temperaturbehandelten Seite durch das Gewebe zu der nicht-temperaturbehandelten Seite übertragen werden. Bei einer beidseitigen Temperaturbehandlung bzw. einer Temperaturbehandlung an beiden Seiten der Warenbahn wird die Wärme bevorzugt an beiden Seiten auf die Warenbahn aufgebracht. Eine beidseitige Temperaturbehandlung erfolgt bevorzugt in den Fällen, in denen bei einem einseitigen Applizieren von Wasser das Wasser von der applizierten Seite durch das Gewebe zu der nicht-applizierten Seite hindurch dringt oder in denen auf beide flächig ausgebildeten Seiten der Warenbahn Wasser appliziert wird.

Bei einer einseitigen Temperaturbehandlung ist bevorzugt die Behandlungswalze oder das Gegenwerkzeug beheizt, bei einer beidseitigen Temperaturbehandlung sind bevorzugt die Behandlungswalze und das Gegenwerkzeug beheizt.

Somit ermöglicht das Verfahren neben den weiter oben genannten Vorteilen, wie ein kostengünstiges Durchführen sowie vorteilhafte Eigenschaften des Gewebes, eine besonders effektive Behandlung zur Reduzierung der Gasdurchlässigkeit des Gewebes, sodass im Vergleich zu trockenen Kalanderprozessen vergleichsweise hohe Produktionsgeschwindigkeiten möglich sind. Versuche haben gezeigt, dass sich eine maximale Produktionsgeschwindigkeit von 5 m/min beim trockenen Kalandrieren auf zumindest 15 m/min durch das erfindungsgemäße Applizieren von Wasser erhöhen ließ. Die Produktionsgeschwindigkeit hängt dabei stark vom Vormaterial und der zu erreichenden Luftdurchlässigkeit ab. Bevorzugt erlaubt das erfindungsgemäße Verfahren eine Erhöhung der Produktionsgeschwindigkeit um einen Faktor 1,5 bis vier, besonders bevorzugt um den Faktor drei, verglichen mit dem trockenen Kalandrieren.

Als besonders vorteilhaft hat sich der erfindungsgemäße zweistufig aufgebaute Prozess erwiesen. Dadurch kann in vorteilhafter Weise eine besonders hohe Reduzierung der Gasdurchlässigkeit des Gewebes in Dickenrichtung erreicht werden. Erfindungsgemäß erfolgt in dem zweistufigen Prozess eine zweimalige Druck- und Temperaturbehandlung in zwei nacheinander angeordneten Behandlungsspalten. Vorrangiges Ziel hierbei ist es, die Temperatur von beiden Seiten auf die Warenbahn wirken zu lassen. Die Seite, auf die hierbei Wasser aufgetragen wird, spielt nur dann eine Rolle, wenn so wenig aufgetragen wird, dass die Warenbahn nicht gleichmäßig durchnässt. In diesem Fall erfolgt der Auftrag bevorzugt auf der Seite, auf der auch der Wärmeeintrag erfolgt, sofern dieser nur von einer Seite erfolgt.

Besonders bevorzugt erfolgt der zweistufige Prozess derart, dass in einem ersten Behandlungsspalt die Warenbahn ausschließlich an einer flächig ausgebildeten ersten Seite temperaturbehandelt wird und in einem zweiten Behandlungsspalt die Warenbahn ausschließlich an einer flächig ausgebildeten zweiten Seite temperaturbehandelt wird. Bevorzug erfolgt dies in beiden Behandlungsspalten mittels einer Walze mit Belag gegen eine beheizte Walze. Erfindungsgemäß wird vor jedem Behandlungsspalt jeweils Wasser appliziert. Da das Wasser bevorzugt jeweils so appliziert wird, dass es die Warenbahn gleichmäßig durchnässt, ist es möglich, aber nicht erforderlich, dass die Applikation jeweils von der Seite erfolgt, von der im anschließenden Behandlungsspalt Wärme eingebracht wird.

Erfindungsgemäß erfolgt der zweistufige Prozess derart, dass in einem ersten Schritt die Warenbahn ausschließlich an einer flächig ausgebildeten ersten Seite befeuchtet bzw. Wasser appliziert und anschließend in einem ersten Behandlungsspalt druckbehandelt und - bevorzugt ausschließlich - die befeuchtete erste Seite temperaturbehandelt wird, und in einem nachgelagerten zweiten Schritt die Warenbahn ausschließlich an einer flächig ausgebildeten zweiten Seite, beispielsweise mittels einer separat ausgebildeten zweiten Sprüheinrichtung, Wasser appliziert und anschließend in einem separaten zweiten Behandlungsspalt druckbehandelt und - bevorzugt ausschließlich - die befeuchtete zweite Seite temperaturbehandelt wird. Für ein vereinfachtes Durchführen des Verfahrens kann es vorgesehen sein, die Warenbahn, bevor diese mit Wasser versehen wird, von einer ersten Bereitstellungseinrichtung, wie einer Wickelwalze oder Kaule, insbesondere von einem ersten Kaulenwagen, aufzunehmen bzw. abzurollen. Dadurch können zur Anbindung bzw. zur Aufnahme einer - beispielsweise aus vorgelagerten Prozessen, wie einer Gewebeherstellung, stammenden - Warenbahn an eine Vorrichtung zur Behandlung der Warenbahn vorteilhafterweise Standard-Kaulenwagen, auch Dockenwagen genannt, verwendet werden. Insbesondere kann dadurch eine solche Behandlungsvorrichtung zur Durchführung des Verfahrens relativ unkompliziert und kostengünstig in ein bestehendes Anlagensystem, wie eine Herstellungslinie, integriert werden. Zur Regelung einer Zugspannung der Warenbahn kann die Lagerrolle motorisch angetrieben oder gebremst werden.

Auch ist es möglich, das erfindungsgemäße Verfahren in den Herstellungsprozess der Warenbahn zu integrieren, das heißt inline anzuwenden. Hierbei kann es vorteilhafterweise vorgesehen sein, die Warenbahn von einer vorangelagerten Einrichtung, beispielweise einer Herstellungsanlage, wie von einer Einrichtung zur Waschbehandlung des Gewebes, zu übernehmen.

In einer Weiterbildung der Erfindung ist es vorgesehen, dass nach der Behandlung in dem Behandlungsspalt die Warenbahn in einem Trocknungsschritt getrocknet wird. Dazu kann die Warenbahn beispielsweise in oder an zumindest einen Zylindertrockner geführt, daran weitestgehend umschlungen sein und - beispielsweise durch ein S-förmiges Umschlingen - mittels diesen getrocknet werden.

In einem letzten Schritt kann die Warenbahn bevorzugt auf eine zweite Lagerrolle, insbesondere eines zweiten Dockenwagens, aufgewickelt werden. Dadurch kann die Warenbahn einer nachgelagerten Behandlungseinrichtung in besonders einfacher Weise zugeführt werden. Ferner kann die Menge bzw. Länge der Warenbahn je nach Bedarf in vorteilhafter Weise reguliert werden. Hierzu können wiederum Standard-Dockenwagen zur Anbindung an die Vorrichtung verwendet werden, so dass ein relativ unkompliziertes und kostengünstiges Betreiben der Vorrichtung ermöglicht ist. Zur Regelung einer Zugspannung der Warenbahn kann die Lagerrolle bevorzugt angetrieben werden.

Bevorzugt wird in zumindest einem Kontrollschritt ein Gasdurchlässigkeitswert der Warenbahn erfasst bzw. gemessen. Insbesondere kann eine Abweichung eines Istwertes von einem Sollwert der Gasdurchlässigkeit detektiert und beispielsweise in Form eines Signals, wie eines visuellen und/oder akustischen Signals, ausgegeben werden. Dadurch kann eine fortlaufend gleiche Qualität des Gewebes gewährleistet werden.

Die Realisierung einer konstanten und materialschonenden Warenspannung in einer Vorrichtung zur Behandlung der Warenbahn stellt eine nicht unerhebliche verfahrenstechnische Hürde dar. Vorliegend wird die Warenbahn in dem Behandlungsspalt verdichtet, um die Gasdurchlässigkeit zu verringern. Ein erhöhter Warenzug nach dieser Behandlung bzw. Kalandrierung würde das Gewebematerial zu stark beanspruchen und in der Folge ein Auseinanderziehen der Bindungspunkte im gewebten Material nach sich ziehen. Das Gewebematerial würde hierdurch zu stark gestreckt werden. Es ist daher bevorzugt vorgesehen, dass zumindest nach der Behandlung in dem Behandlungsspalt und/oder vor dem Applizieren von Wasser eine Zugspannung bzw. ein Zugspannungswert der Warenbahn in Vorlaufrichtung erfasst und/oder die Zugspannung insbesondere konstant gehalten bzw. geregelt wird. Eine solche Kontrolle der Zugspannung der Warenbahn kann zumindest die Begrenzung, aber auch die Regelung der Zugspannung der Warenspannung, insbesondere zur Konstanthaltung einer bestimmten Zugspannung, bewirken. Eine Erfassung der Zugspannung kann in Vorlaufrichtung der Warenbahn an mehreren vorteilhaften Stellen der in einer Vorrichtung befindlichen Warenbahn erfolgen, beispielsweise bei sämtlichen nach einem ersten Kalandrierprozess folgenden Behandlungsschritten, insbesondere nach jedem Kalandrierprozess, nach einer Trocknung und/oder vor einem Aufwickeln der Warenbahn auf einen Dockenwagen. Im Kalandereinlauf kann ein Zugwerk vorgesehen sein, um gezielt Warenspannung aufbauen zu können. Das Applizieren von Wasser kann vor oder nach dem Zugwerk stattfinden.

Die Erfassung der Zugspannung kann beispielsweise mittels einer an sich bekannten Kraftmessdose und/oder eines Kraftmessrings und/oder anderen Elementen zur Kraftmessung erfolgen.

Hierbei kann insbesondere die aufgrund der Warenspannung auf einzelne Walzen wirkende Kraft erfasst oder ermittelt werden.

Die aufgrund der Warenspannung auf diese Walzen wirkende Radialkraft bewirkt bevorzugt eine Veränderung der Auflagerkraft dieser Walzen an beiden Walzenenden. Dies gilt unabhängig davon, ob es sich bei diesen Walzen um Walzen mit rotierenden Zapfen oder um Walzen handelt, bei denen ein Walzenmantel um eine nicht-rotierende Achse rotiert.

Bevorzugt wird diese Veränderung der Auflagerkraft zumindest an einem Ende der Walze gemessen.

Ein konstant-halten der Zugspannung der Warenbahn, insbesondere ein Ausgleichen geringer Zugspannungsänderungen, kann beispielsweise mittels einer sogenannten Pendelwalze erfolgen. Hierbei wird zumeist ein Pendelarm über einen in der Regel pneumatischen Zylinder mit einstellbarem Druck gegen die Zugspannung der Warenbahn angestellt. Sobald eine Differenz zwischen einer im Auslassbereich der Pendelwalze und einer im Einlassbereich der Pendelwalze stattfindenden Warenbahn-Förderung vorliegt, ändert sich die Position des Pendelarms, sodass ein Längenausgleich und somit auch ein konstant-halten der Zugspannung ermöglicht ist.

Eine aktive Regelung der Zugspannung der Warenbahn erfolgt bevorzugt mittels der vorgesehenen Walzen, beispielsweise in einem Walzenspalt, durch ein zumindest teilweises Umschlingen einer Walze oder durch ein Umschlingen mit zusätzlicher Auflagewalze. Dazu werden bevorzugt auch gummierte oder aufgeraute Walzen, die beispielsweise einen von der Warenbahn durchlaufenen Zugspalt bilden, angetrieben, um über die gesamte Länge der Behandlungsvorrichtung einen schonenden Transport der Warenbahn zu ermöglichen. Die gummierten Walzen sind beispielsweise nach dem Trocknungsschritt angeordnet. Anstelle der beispielsweise einen Zugspalt bildenden gummierten Walzen kann auch eine von der Warenbahn zumindest teilweise umschlungene, angetriebene oder bremsbare Walze vorgesehen sein, deren Reibschluss durch eine Gummierung oder durch eine raue Oberfläche erhöht sein kann. Ferner kann zum Beispiel die Bremse an der Bereitstellungseinrichtung, welche beispielsweise als eine pneumatische Bremse ausgebildet ist, die ein Bremsmoment indirekt über Luftdruck aufbringen kann, zur Regelung der Warenspannung dienen. Weitere Stellglieder zur Regelung der Warenspannung können durch einstellbare Antriebsmomente, insbesondere positive oder negative Antriebsmomente, zum Beispiel geregelt durch einen Öldruck bei Ölmotoren oder das Drehmoment an Elektromotoren, und schließlich durch die Drehzahlen und damit Umfangsgeschwindigkeiten an den angetriebenen Walzen gebildet sein. Die Warenspannung kann dadurch bevorzugt auf jeweils einen vorgesehenen Wert reguliert werden, wie beispielsweise vor dem Kalandrieren auf maximal 400 N/m und nach dem Kalandrieren auf maximal 250 N/m. Besonders bevorzugt ist der Zugspannungswert vor dem Kalandrierprozess größer als der Zugspannungswert nach dem Kalandrierprozess.

Die erfindungsgemäße Vorrichtung zur insbesondere kontinuierlichen Behandlung einer textilen Warenbahn in einer Vorlaufrichtung, insbesondere zum Reduzieren der Gasdurchlässigkeit der Warenbahn in Dickenrichtung, umfasst zumindest eine Applikationseinrichtung zum Wasser-Applizieren auf zumindest eine flächig ausgebildete Seite der Warenbahn, sowie zumindest eine in Vorlaufrichtung der Applikationseinrichtung nachgelagerte, unter Bildung eines Behandlungsspalts mit einem Gegenwerkzeug angeordnete Behandlungswalze. Dadurch lässt sich insbesondere das vorteilhafte Verfahren nach den Ansprüchen 1 bis 6 durchführen. Insbesondere kann durch das Befeuchten und anschließende Druckbehandeln bzw. Kalandrieren ein Verkleinern der Gewebeporen und dadurch - wie oben ausführlich erläutert - eine effektive Reduzierung der Gasdurchlässigkeit bei nahezu gleichbleibendem Gewicht der Warenbahn erreicht werden. Durch die Anwendung von Wasser als Befeuchtungsmittel ist ein besonders kostengünstiges und umweltfreundliches Behandeln der Warenbahn ermöglicht. Ferner ist der Aufwand zum Reinigen der Vorrichtung minimiert. Das hergestellte Gewebe, welches für die Anwendung als Airbag geeignet ist, lässt sich zudem besonders leicht falten und ist dadurch besonders unkompliziert und mit relativ wenig Kraftaufwand verpackbar. In dem Behandlungsspalt wird bevorzugt im Wesentlichen eine Linienkraft auf das durch den Spalt geführte Gewebe ausgeübt. Dazu ist das Gegenwerkzeug erfindungsgemäß als eine Gegenwalze ausgebildet. Die Gegenwalze kann folglich mit der Behandlungswalze den Behandlungsspalt, oder auch Nip genannt, bilden.

Erfindungsgemäß umfasst die Vorrichtung eine zum Applizieren von Wasser auf eine flächig ausgebildete erste Seite der Warenbahn angeordnete erste Applikationseinrichtung, und eine in Vorlaufrichtung der ersten Applikationseinrichtung nachgelagerte, unter Bildung eines ersten Behandlungsspalts mit einem ersten Gegenwerkzeug angeordnete erste Behandlungswalze, und eine zum Applizieren von Wasser auf eine flächig ausgebildete zweite Seite der Warenbahn angeordnete zweite Applikationseinrichtung, und eine in Vorlaufrichtung der zweiten Applikationseinrichtung nachgelagerte, unter Bildung eines zweiten Behandlungsspalts mit einem zweiten Gegenwerkzeug angeordnete zweite Behandlungswalze umfasst. Dadurch kann der Behandlungsprozess zweistufig aufgebaut sein, sodass die Warenbahn zunächst in einem ersten Schritt an einer ersten Flachseite hinsichtlich der Gasdurchlässigkeit behandelt, also mit Wasser besprüht und anschließend druck- und temperaturbehandelt werden kann, und sodann in einem nachgelagerten zweiten Schritt an einer gegenüberliegenden zweiten Flachseite hinsichtlich der Gasdurchlässigkeit behandelt werden kann. Eine solche zweistufige Behandlung hat sich als besonders effektiv und vorteilhaft gezeigt.

Die Behandlungswalze ist temperierbar ausgebildet. Insbesondere kann sowohl die erste als auch die zweite Behandlungswalze temperierbar ausgebildet sein. Besonders bevorzugt ist bei der Anordnung der Behandlungswalze und des Gegenwerkzeugs ausschließlich die Behandlungswalze temperierbar, so dass in dem Behandlungsspalt ausschließlich die jeweils befeuchtete Seite der Warenbahn temperaturbehandelt werden kann. Dadurch kann an der befeuchteten Seite ein schlagartiges Verdampfen zumindest eines Teils des applizierten Wassers erfolgen. Grundsätzlich kann auch das Gegenwerkzeug bzw. die Gegenwalze temperierbar ausgebildet sein.

Das Gegenwerkzeug ist als eine Gegenwalze, insbesondere als eine Systemwalze, besonders bevorzugt als durchbiegesteuerbare Walze, beispielsweise als sogenannte schwimmende oder als stempelgestützte Walze ausgebildet. Dazu weist die Gegenwalze bevorzugt eine Kompositoberfläche auf. Die Gegenwalze ist zur Behandlungswalze bevorzugt in entgegengesetzter Richtung gedreht. Die Behandlungswalze ist bevorzugt als eine Stahlwalze mit einer Stahloberfläche ausgebildet. Eine solche Walzenpaarung, insbesondere eine Kombination aus glatter Stahloberfläche gegen eine weichere Kompositoberfläche, hat sich zur Behandlung der Warenbahn, insbesondere zum Reduzieren der Gasdurchlässigkeit, als vorteilhaft herausgestellt.

Um vorgesehene Werte für die Gasdurchlässigkeit, die während des Behandlungsverfahrens vorzugsweise online gemessen werden, einhalten zu können, weist bei einer bevorzugten Ausführung der Erfindung die Oberfläche zumindest der Gegenwalze folgende Parameter auf: S-Walze mit zylindrischem Faserverbundwerkstoff; eine Härte bei 20°C von 92+/-3 Shore D; eine Härte bei 100°C von 89+/-3 Shore D. Die Behandlungswalze ist hierbei eine Stahlwalze, welche vorzugsweise hart-verchromt ist.

In einer Weiterbildung der Erfindung ist zum Trocknen der Warenbahn bevorzugt zumindest ein Trockner, bevorzugt ein dampfbeheizter Trockner, vorgesehen, der in Vorlaufrichtung dem letzten Behandlungsspalt nachgelagert sein kann. Dadurch kann die Warenbahn, beispielsweise für weitere nachgelagerte Behandlungsschritte, vollständig getrocknet werden. Der Trockner kann vorteilhafterweise als ein Zylindertrockner ausgebildet sein, insbesondere mit einer Edelstahloberfläche.

Vorzugsweise sind zum Abwickeln der Warenbahn von der ersten Bereitstellungseinrichtung, wie einem ersten Dockenwagen, eine Warenabwickeleinrichtung, und zum Aufwickeln der Warenbahn auf eine zweite Bereitstellungseinrichtung, wie einen zweiten Dockenwagen, eine Warenaufwickeleinrichtung vorgesehen. Dadurch können insbesondere standardisierte Dockenwagen zur Benutzung mit der Vorrichtung verwendet werden.

An zumindest der Warenabwickeleinrichtung kann eine Bremseinrichtung zum Bremsen einer die Warenbahn tragenden Lagerrolle des ersten Dockenwagens vorgesehen sein, insbesondere zum Abbremsen des Abwickelvorgangs. Die Bremse kann beispielsweise als eine an sich bekannte Scheiben-, Trommel- oder Bandbremse ausgebildet sein. Die Bremse ist bevorzugt elektronisch, hydraulisch oder pneumatisch ansteuerbar. Insbesondere kann beispielsweise eine auf einer Konsole angeordnete Scheibenbremse bevorzugt seitlich an dem ersten Dockenwagen positioniert und installiert sein. Ferner können kundenseitige Dockenwagen, welche nicht mit einer Bremse ausgestattet sind, bevorzugt über eine Gelenkwelle oder einen Riemen mit einer solchen, beispielsweise vorrichtungsseitig angeordneten Bremse verbunden werden. Die Warenbahn kann dadurch über den Umfang faltenfrei und spannungsgeregelt abgewickelt werden.

Bei der Warenaufwickeleinrichtung kann das ungestreckte, verdichtete Gewebematerial mit einem Zentrumsabwickler spannungsarm, schonend und industriegerecht auf eine Bereitstellungseinrichtung, wie eine Lagerrolle bzw. Hülse eines zweiten Dockenwagens aufgewickelt werden. Dazu kann der zweite Dockenwagen beispielsweise über einen Gelenkarm mit einem vorrichtungsseitigen Antrieb, insbesondere Drehantrieb, zum Antreiben der Lagerrolle des zweiten Dockenwagens, verbunden sein.

Besonders bevorzugt ist es vorgesehen, dass in Vorlaufrichtung zwischen einer Warenabwickeleinrichtung zum Abwickeln der Warenbahn von einem Dockenwagen und einer insbesondere ersten Sprüheinrichtung, zwischen einem Behandlungsspalts und einer Sprüheinrichtung, zwischen einem Behandlungsspalts und einem Trockner und/oder zwischen dem Trockner und einer Warenaufwickeleinrichtung zum Aufwickeln der Warenbahn auf einen Dockenwagen eine Pendelwalze und/oder eine Kraftmessdose zur Warenspannungseinstellung angeordnet ist. Die Pendelwalze und/oder die Kraftmessdose können insbesondere zum Einhalten einer definierten Warenzugspannung, beispielsweise einer Vorspannkraft von 250 N/m, vorgesehen sein. Eine solche Überwachung der Zugspannung ist insbesondere am Kalanderaustritt vorteilhaft. Dadurch kann über die gesamte Vorrichtung in Vorlaufrichtung eine annähernd gleiche Spannkraft, insbesondere Zugspannung, der Warenbahn erreicht werden. Anstelle oder zusätzlich zu der Kraftmessdose kann ein Kraftmessring und/oder ein anderes Element zur Kraftmessung Verwendung finden.

Nachfolgend wird ein Ausführungsbeispiel der Erfindung anhand der Figuren näher erläutert.

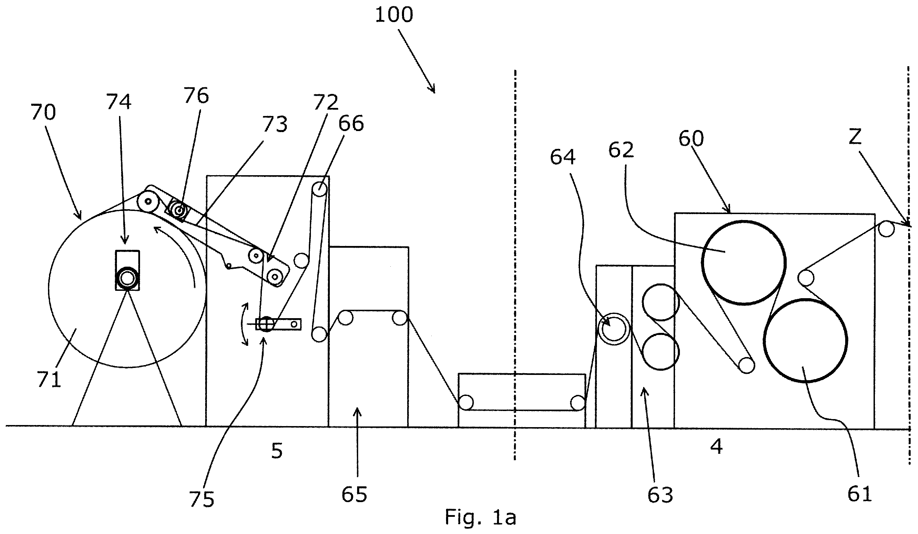

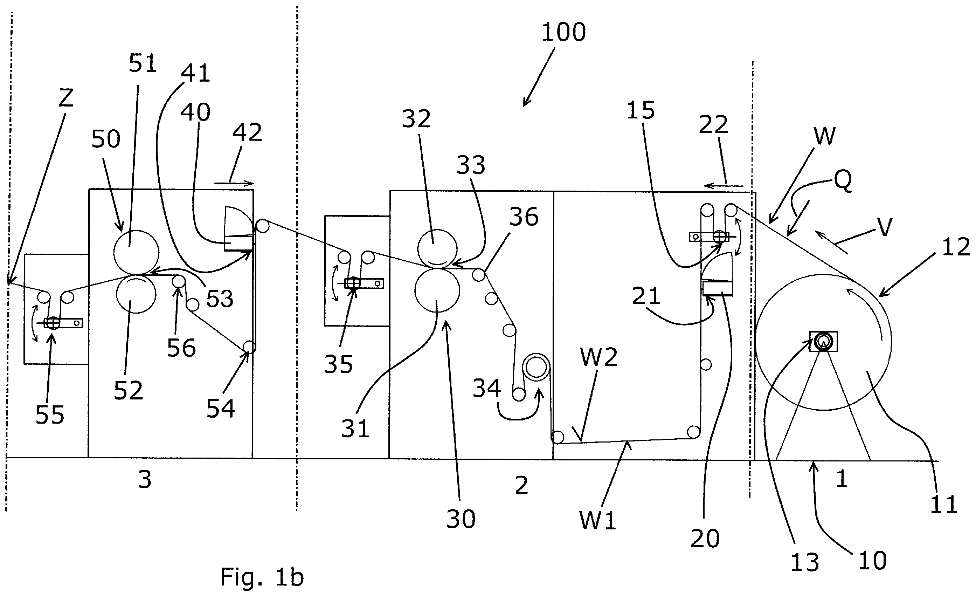

Die Figuren 1a und 1b zeigen in einer Zusammenschau bzw. Gesamtansicht schematisch in einer seitlichen Schnittansicht eine Ausführung der erfindungsgemäßen Vorrichtung 100 zur Behandlung einer textilen Warenbahn W. Die Figur 1a bildet den linken Bildteil der Gesamtansicht und Figur 1b den rechten Bildteil der Gesamtansicht. Der Punkt Z kann als Überschneidungspunkt angesehen werden und zeigt jeweils auf ein und dieselbe Stelle der Vorrichtung 100. Gemäß einer Vorlaufrichtung V der durch die Vorrichtung 100 hindurchgeführten Warenbahn W betrifft Figur 1b einen ersten bzw. vorgelagerten Abschnitt der Vorrichtung 100 und Figur 1a einen dem ersten Abschnitt nachgelagerten zweiten Abschnitt der Vorrichtung 100.

Die mit der in den Figuren 1a, 1b gezeigten Vorrichtung 100 durchgeführte Behandlung dient zum Reduzieren der Gasdurchlässigkeit der Warenbahn W, insbesondere in Dickenrichtung Q, und kann Bestandteil einer vorliegend nicht gezeigten, möglicherweise weitere Komponenten umfassenden Herstellungslinie sein.

Die Dickenrichtung Q der Warenbahn W ist jeweils als die Richtung im Wesentlichen senkrecht zu zumindest einer der beiden von der Warenbahn W flächig ausgebildeten Seiten W1, W2 zu verstehen, insbesondere im Wesentlichen senkrecht zu einer Oberseite, wie beispielsweise die Seite W1, und einer Unterseite, wie beispielsweise die Seite W2 der Warenbahn W. Die in Figur 1b gezeigte Richtung Q ist daher nur als Beispiel für die konkret gezeigte Stelle der Warenbahn W zu verstehen, insbesondere ändert sich die Ausrichtung der Dickenrichtung Q in Abhängigkeit einer Änderung des Verlaufs der Warenbahn W.

Die Vorrichtung 100 kann in mehrere, vorliegend durch gestrichelte vertikale Linie begrenzte Sektionen 1, 2, 3, 4, 5 unterteilt werden, welche von der Warenbahn W in Vorlaufrichtung V, insbesondere vorliegend vom rechten Bildrand der Figur 1b zum linken Bildrand der Figur 1a, durchlaufen wird.

In der Sektion 1 erfolgt eine Abwickelung der Warenbahn. Hierzu ist eine Warenabwickeleinrichtung 12 vorgesehen. Die Warenabwickeleinrichtung 12 ermöglicht ein spannungsgeregeltes Abwickeln der Warenbahn W von einer Bereitstellungseinrichtung 11, vorliegend von einer Lagerrolle eines Dockenwagens 10, oder auch Kaulenwagen genannt. Die Lagerrolle 11 dreht sich beim Abwickelvorgang in gezeigter Pfeilrichtung. Um ein zu schnelles Drehen der Lagerrolle 11, insbesondere ein Aus- oder Weglaufen der Warenbahn von der Lagerrolle 11 zu vermeiden, und um die Warenbahn W faltenfrei und spannungsgeregelt von der Lagerrolle 11 abwickeln oder abrollen zu können, ist an der Lagerrolle 11, bevorzugt an dem Dockenwagen 10, eine Bremse 13 zum Abbremsen der Drehbewegung der Lagerrolle 11 vorgesehen. Die Bremse 13 kann beispielsweise als eine Multischeibenbremse ausgebildet sein.

Die Sektion 2 umfasst ein Einlaufgerüst zur Einführung der Warenbahn W in Vorlaufrichtung V in die Vorrichtung 100, wobei eine erste Pendelwalze 15 vorgesehen ist, welche zur Kontrolle der Zugspannung der Warenbahn W in Vorlaufrichtung V im Bereich der Warenabwickeleinrichtung 12 dient. Sobald die Pendelwalze 15 ein Überschreiten eines zuvor definierten Soll-Zugspannungswertes detektiert, insbesondere durch eine Verlagerung der in einem begrenzten Rahmen verlagerbaren Pendelwalze 15, welches in den Figuren 1a und 1b jeweils durch den Doppelpfeil gezeigt ist, wird ein Signal an die Bremse 13 gesendet, so dass die Bremse 13 zumindest teilweise gelöst wird und dadurch die Zugspannung in der Warenbahn W verringert werden kann. Verringert sich die Spannung in der Warenbahn W, greift die Bremse 13 erneut zumindest teilweise ein und hält dadurch die Warenbahn zurück, um die Warenspannung zu erhöhen und bevorzugt konstant zu halten.

In einem nächsten Schritt ist die Warenbahn W an einer ersten als Sprüheinrichtung ausgebildeten Applikationseinrichtung 20 vorbeigeführt. Die erste Applikationseinrichtung 20 dient zum Applizieren von Wasser auf die Warenbahn W und umfasst dazu eine oder mehrere Rotationsbefeuchter 21 oder klassische Sprühdüsen, beispielsweise Zweistoffsprühdüsen. Die erste Applikationseinrichtung 20 ist derart relativ zu der durch die Vorrichtung 100 geführten Warenbahn W angeordnet, dass ausschließlich eine flächig ausgebildete erste Seite W1, auch erste Flachseite genannt, der Warenbahn W mit Wasser besprüht wird. Dazu sprüht die erste Applikationseinrichtung 20 in eine definierte Sprührichtung, welche durch Pfeil 22 angezeigt ist. Die andere flächig ausgebildete Seite W2, insbesondere zweite Seite oder Flachseite, der Warenbahn W wird insbesondere nicht mit Wasser besprüht oder befeuchtet. Die Warenbahn W ist sodann relativ weit nach unten geführt, insbesondere unter eine nicht näher dargestellte Trittfläche, die für eine Zugänglichkeit der Maschine durch eine Bedienperson dient, und sodann über ein Zugwerk 34, Einlaufrollen und eine Breitstreckwalze 36 zu einer ersten Kalandereinrichtung 30 geführt.

Die erste Kalandereinrichtung 30 umfasst eine erste Behandlungswalze 31, die mit einer ersten Gegenwalze 32 einen ersten Behandlungsspalt 33 ausbildet, wobei die Warenbahn W durch den ersten Behandlungsspalt 33 hindurch geführt ist. Die erste Behandlungswalze 31 ist als eine temperierbare Stahlwalze mit einer verchromten Oberfläche ausgebildet, an der die Warenbahn W mit der zuvor mit Wasser besprühten ersten Seite W1 anliegt bzw. in Berührung steht. Durch die von der ersten Behandlungswalze 31 ausgehende Wärme und den im ersten Behandlungsspalt 33 vorliegenden Druck kann das an der ersten Flachseite W1 befindliche Wasser verdampft werden und dadurch ein Verdichtungseffekt im Gewebe der Warenbahn W bewirkt werden. Insbesondere kann durch die Kombination von Temperatur, Druck und Verweilzeit, welche durch die Warenbahngeschwindigkeit bedingt ist, ein Verkleinern und/oder Verschließen der Gewebeporen und somit ein Verdichtungseffekt des Gewebes erzeugt werden. Hierbei kann es förderlich sein, den Umschlingungswinkel der Warenbahn W auf der beheizten ersten Walze 31 anzupassen, um ein gewisses Vorwärmen der Warenbahn W zu erreichen. Der erste Kalander 30 umfasst ferner ein Gestell, auf dem die beiden Walzen 31, 32 gelagert sind, eine Hydraulik, Schmiereinheit sowie im Warenbahnauslauf eine Pendelwalze 35 zur Warenspannungskontrolle.

Die Pendelwalze 35 funktioniert nach der bereits weiter oben zur Pendelwalze 15 beschriebenen Art und Weise, und regelt in der vorliegenden Anordnung die Zugspannung Warenbahn W im Bereich eines Auslasses des ersten Behandlungsspalts 33. Zur Regelung der Warenspannung kann die Pendelwalze 35 ein Signal vorliegend beispielsweise an eine Steuerung der ersten Kalandereinrichtung 30 zum Beschleunigen oder Abbremsen der Walzendrehung ausgeben.

Unmittelbar nach der ersten Kalandereinrichtung 30 schließt sich in der Sektion 3 eine zweite Applikationseinrichtung 40 an. Diese dient wiederum zum Besprühen der Warenbahn W mit Wasser und umfasst dazu eine oder mehrere Sprühdüsen bzw. Rotationsbefeuchter 41. Die zweite Applikationseinrichtung 40 ist derart relativ zu der durch die Vorrichtung 100 geführten Warenbahn W angeordnet, dass ausschließlich die zweite Seite W2 der Warenbahn W mit Wasser besprüht wird. Dazu sprüht die zweite Applikationseinrichtung 40 in eine definierte Sprührichtung, welche durch Pfeil 42 angezeigt ist. Die erste Seite W1 wird insbesondere nicht mit Wasser besprüht oder befeuchtet. Die zweite Applikationseinrichtung 40 ist im Wesentlichen baugleich wie die erste Applikationseinrichtung 20 ausgebildet. Die Warenbahn W wird nach dem einseitigen Befeuchten - bei dem dargestellten Ausführungsbeispiel wiederum über Einlaufrollen 54 und eine Breitstreckwalze 56 - einer zweiten Kalandereinrichtung 50 zugeführt. Optional kann zusätzlich vor der Breitstreckwalze 56 ein nicht dargestelltes Zugwerk angeordnet sein.

Die zweite Kalandereinrichtung 50 umfasst eine zweite Behandlungswalze 51, die mit einer zweiten Gegenwalze 52 einen zweiten Behandlungsspalt 53 ausbildet, wobei die Warenbahn W durch den zweiten Behandlungsspalt 53 hindurch geführt ist. Die zweite Behandlungswalze 51 ist wiederum als eine temperierbare Stahlwalze mit einer verchromten Oberfläche ausgebildet. An dieser Oberfläche liegt die Warenbahn W mit der zuvor mit Wasser besprühten zweiten Seite W2 an. Durch die von der zweiten Behandlungswalze 51 ausgehende Wärme und den im zweiten Behandlungsspalt 53 vorliegenden Druck kann nunmehr das an der zweiten Flachseite W2 befindliche Wasser verdampfen und dadurch ein diesseitiger Verdichtungseffekt im Gewebe der Warenbahn W unterstützt werden. Der zweite Kalander 50 umfasst ebenfalls ein Gestell, auf dem die beiden Walzen 51, 52 gelagert sind, eine Hydraulik, Schmiereinheit sowie im Warenbahnauslauf eine Pendelwalze 55 zur Warenspannungskontrolle.

Die Pendelwalze 55 funktioniert nach der bereits weiter oben zur Pendelwalze 15, 35 beschriebenen Art und Weise, und regelt in der vorliegenden Anordnung die Zugspannung Warenbahn W im Bereich eines Auslasses des zweiten Behandlungsspalts 53. Zur Regelung der Warenspannung kann die Pendelwalze 55 ein Signal vorliegend beispielsweise an eine Steuerung der zweiten Kalandereinrichtung 50 zum Beschleunigen oder Abbremsen der Walzendrehung ausgeben.

Die in Vorlaufrichtung V auf die zweite Kalandereinrichtung 50 nachfolgende Sektion 4 dient zur Trocknung der Warenbahn W. Hierzu ist eine Trocknungseinrichtung 60 vorgesehen. Die Trocknungseinrichtung 60 ist als ein Zylindertrockner mit zwei Trocknung- bzw. Heißzylindern 61, 62 ausgebildet. Die Zylindertrockner 61, 62 weisen über ihren Umfang eine Edelstahloberfläche auf, an der die Warenbahn W mit jeweils einer Flachseite W1, W2 anliegt. Insbesondere liegt die Warenbahn W vorliegend mit der zweiten Seite W2 an der ersten Zylindertrommel 61 und mit der ersten Seite W1 an der zweiten Zylindertrommel 62 an. Dadurch kann das zuvor mit Wasser bzw. Feuchte beladene Gewebe effektiv und vollständig getrocknet werden. Ein Ankleben, Anhaften oder das Zurückbleiben von Rückständen ist aufgrund der Anwendung von reinem Wasser nicht zu erwarten. Alternative - vorliegend nicht gezeigte - Trocknungsverfahren oder Trocknungsvorrichtungen sind ebenfalls denkbar. In einer der Trocknungseinrichtung 60 nachgelagerten Anordnung 63 durchläuft die Warenbahn W, insbesondere S-förmig, eine zwei Kühlwalzen umfassende Kühleinrichtung 63 zur Kühlung der Warenbahn W. Anschließend ist wiederum eine gummierte Walze 64 zur Regelung der Zugspannung der Warenbahn W vorgesehen.

Bevor die Warenbahn W in der letzten Sektion 5 und in einem letzten Schritt wiederum auf eine Bereitstellungseinrichtung 71, insbesondere eine Lagerrolle eines Dockenwagens 70, aufgewickelt wird, ist die Warenbahn W erneut relativ weit nach unten geführt, sodass oberhalb der Warenbahn W ein nicht dargestellter Tritt oder Laufsteg für eine Bedienperson angeordnet sein kann. Zudem erfolgt in einer Gasdurchlässigkeitskontrolleinrichtung 65 ein kontinuierliches Messen der Gasdurchlässigkeit des fertigkalandrierten Gewebes. Dadurch kann die Gasdurchlässigkeit und somit das Ergebnis der Kalandereffekte kontinuierlich kontrolliert werden. Zur Regelung der Zugspannung der Warenbahn W ist unmittelbar vor dem Schritt des Aufwickeln eine Kraftmessdose 66 vorgesehen.

Zum Aufwickeln der Warenbahn W auf die Lagerrolle 71 ist ein Zentrumswickler 73 vorgesehen. Dazu kann insbesondere die Lagerrolle 71 in Rotation versetzt werden, beispielsweise mittels eines Drehstrommotors 74. Die Lagerrolle 71 dreht sich beim Aufwickelvorgang in gezeigter Pfeilrichtung. Der Zentrumswickler 73 ermöglicht somit eine spannungsarme, faltenfreie und oberflächenschonende Aufwicklung der Warenbahn W auf die Lagerrolle 71. Zu Beginn des Wickelvorgangs ist der Zentrumswickler 73 zum Umfang der Wickelrolle relativ nahe an einer Welle der Lagerrolle 71 angeordnet, welches mit der in gestrichelter Linie gezeichneten Warenbahn W gezeigt ist. Zum Ende des Wickelvorgangs ist der Zentrumswickler 73 - wie gezeigt - relativ weit nach oben verschwenkt, so dass die Warenbahn gleichmäßig am wachsenden Umfang der Lagerrolle 71 aufgewickelt werden kann. Um eine Faltenbildung zu vermeiden, kann eine mit der Warenbahn zusammenwirkende Breitstreckwalze 76 vorgesehen sein. Alternativ kann die Warenbahn W einer nicht dargestellten, der Vorrichtung 100 nachgelagerten Einrichtung, beispielsweise eine Einrichtung zur Beschichtung des Gewebes, zugeführt werden.

Der Antriebsmotor 74 kann - ähnlich wie die Bremse 13 an dem einlaufseitigen ersten Dockenwagen 10 - auf einem Montageblock, insbesondere seitlich neben dem Wickler 73 bzw. dem Dockenwagen 70 angeordnet, und beispielsweise über eine nicht näher dargestellte Gelenkwelle oder einen Riemen mit der Welle der Lagerrolle 71 verbunden sein. Zur Regelung des Antriebsmotors 74 dient die Pendelwalze 75, welche in Abhängigkeit der in diesem Bereich erfassten Zugspannung der Warenbahn W ein Signal zur Anpassung bzw. Regelung der Antriebsgeschwindigkeit am Antriebsmotor 74, insbesondere ein Beschleunigen oder Verzögern, ausgeben kann.

Zusammenfassend ist die Warenbahn W zumindest durch folgende, in Vorlaufrichtung V in dieser Reihenfolge angeordnete Komponenten der Vorrichtung 100 geführt: Warenabwickeleinrichtung 12, Pendelwalze 15, erste Applikationseinrichtung 20, erster Behandlungsspalt 33, Pendelwalze 35, zweite Applikationseinrichtung 40, zweiter Behandlungsspalt 53, Pendelwalze 55, Trocknungseinrichtung 60, Kühleinrichtung 63, Gasdurchlässigkeitskontrolleinrichtung 65, Pendelwalze 75 und Aufwickeleinrichtung 72.

Es sollte deutlich sein, dass der Schutzbereich der vorliegenden Erfindung nicht auf das beschriebene Ausführungsbeispiel begrenzt ist. Insbesondere der Aufbau und die Anordnung der einzelnen Walzen, Rollen und Kontrolleinrichtungen, wie Pendelwalze und Gasdurchlässigkeitskontrolleinrichtung, können - ohne den Kern der Erfindung zu verändern - durchaus modifiziert sein.

### Bezugszeichenliste:

- 1: Sektion
- 2: Sektion
- 3: Sektion
- 4: Sektion
- 5: Sektion
- 10: Dockenwagen
- 11: Bereitstellungseinrichtung
- 12: Warenabwickeleinrichtung
- 13: Bremse
- 15: Pendelwalze
- 20: Applikationseinrichtung
- 21: Sprühdüse
- 22: Sprührichtung
- 30: Kalandereinrichtung, Walzenpaar
- 31: Behandlungswalze
- 32: Gegenwerkzeug, Gegenwalze
- 33: Behandlungsspalt
- 34: Einlaufrolle
- 35: Pendelwalze
- 36: Breitstreckwalze
- 40: Applikationseinrichtung
- 41: Sprühdüse
- 42: Sprührichtung
- 50: Kalandereinrichtung, Walzenpaar
- 51: Behandlungswalze
- 52: Gegenwerkzeug, Gegenwalze
- 53: Behandlungsspalt
- 54: Einlaufrolle
- 55: Pendelwalze
- 56: Breitstreckwalze
- 60: Trocknungseinrichtung
- 61: Trockner
- 62: Trockner
- 63: Kühleinrichtung
- 65: Gasdurchlässigkeitskontrolleinrichtung
- 70: Dockenwagen
- 71: Lagerrolle
- 72: Aufwickeleinrichtung
- 73: Zentrumswickler
- 74: Antriebsmotor
- 75: Pendelwalze
- 76: Breitstreckwalze
- 100: Vorrichtung
- Q: Dickenrichtung
- V: Vorlaufrichtung
- W: Warenbahn
- W1: Flachseite, Oberfläche
- W2: Flachseite, Oberfläche
- Z: Überschneidungspunkt

## Patentansprüche

1. Verfahren zur Behandlung einer textilen Warenbahn (W) zum Reduzieren der Gasdurchlässigkeit der Warenbahn (W), bei dem die eine flächig ausgebildete erste Seite (W1) und eine gegenüberliegende flächig ausgebildete zweite Seite (W2) umfassende Warenbahn (W) in einer Vorlaufrichtung (V) transportiert und durch zumindest einen von einer Behandlungswalze (31, 51) und einem als Gegenwalze ausgebildeten Gegenwerkzeug (32, 52) gebildeten Behandlungsspalt (33, 53) geführt wird, wobei vor dem Passieren des Behandlungsspalts (33, 53) an zumindest einer der beiden flächig ausgebildeten Seiten (W1, W2) der Warenbahn (W) Wasser appliziert wird, und anschließend die Warenbahn (W) in dem Behandlungsspalt (33, 53) druckbehandelt und an zumindest einer der beiden flächig ausgebildeten Seiten (W1, W2) temperaturbehandelt wird, wobei in einem ersten Schritt an ausschließlich der ersten Seite (W1) der Warenbahn (W) Wasser appliziert und anschließend die Warenbahn (W) in einem ersten Behandlungsspalt (33) druckbehandelt und die erste Seite (W1) temperaturbehandelt wird, und in einem nachgelagerten zweiten Schritt an ausschließlich der zweiten Seite (W2) Wasser appliziert und anschließend die Warenbahn (W) in einem separaten zweiten Behandlungsspalt (53) druckbehandelt und die zweite Seite (W2) temperaturbehandelt wird.

2. Verfahren nach Anspruch 1, **dadurch gekennzeichnet, dass** vor dem ersten Applizieren von Wasser die Warenbahn (W) von einer ersten Bereitstellungseinrichtung (11), insbesondere von einem ersten Dockenwagen (10), aufgenommen oder von einer vorangelagerten Einrichtung übernommen wird.

3. Verfahren nach einem der voranstehenden Ansprüche, **dadurch gekennzeichnet, dass** nach der Behandlung in dem Behandlungsspalt (33, 53) die Warenbahn (W) in einem Trocknungsschritt (4) getrocknet wird.

4. Verfahren nach einem der voranstehenden Ansprüche, **dadurch gekennzeichnet, dass** in einem weiteren Schritt die Warenbahn (W) auf eine zweite Bereitstellungseinrichtung (71), insbesondere einen zweiten Dockenwagen (70), aufgewickelt wird.

5. Verfahren nach einem der voranstehenden Ansprüche, **dadurch gekennzeichnet, dass** in zumindest einem Kontrollschritt (5) ein Gasdurchlässigkeitswert der Warenbahn (W) erfasst wird.

6. Verfahren nach einem der voranstehenden Ansprüche, **dadurch gekennzeichnet, dass** zumindest nach der Behandlung in dem Behandlungsspalt (33, 53) und/oder vor dem Applizieren von Wasser ein Spannungswert der Warenbahn (W) in Vorlaufrichtung (V) erfasst und/oder geregelt wird.

7. Vorrichtung zur Durchführung eines Verfahrens nach einem der vorhergehenden Ansprüche zur Behandlung einer textilen Warenbahn (W) in einer Vorlaufrichtung (V) zum Reduzieren der Gasdurchlässigkeit der Warenbahn (W), umfassend
- zumindest eine Einrichtung zur Applikation (20, 40) von Wasser auf zumindest eine flächig ausgebildete Seite (W1, W2) der Warenbahn (W),
- zumindest eine in Vorlaufrichtung (V) der Einrichtung zur Applikation von Wasser (20, 40) nachgelagerte, unter Bildung eines Behandlungsspalts (33, 53) mit einem als Gegenwalze ausgebildeten Gegenwerkzeug (32, 52) angeordnete Behandlungswalze (31, 51), wobei die Behandlungswalze (31, 51) und/oder das Gegenwerkzeug (32, 52) temperierbar sind,
**dadurch gekennzeichnet, dass** zur Applikation von Wasser ausschließlich auf eine flächig ausgebildete erste Seite (W1) der Warenbahn (W) eine erste Applikationseinrichtung (20), und eine in Vorlaufrichtung (V) der ersten Applikationseinrichtung (20) nachgelagerte, unter Bildung eines ersten Behandlungsspalts (33) mit einer ersten Gegenwalze (32) angeordnete erste Behandlungswalze (31), und zur Applikation von Wasser ausschließlich auf eine flächig ausgebildete zweite Seite (W2) der Warenbahn (W) eine zweite Applikationseinrichtung (40), und eine in Vorlaufrichtung (V) der zweiten Applikationseinrichtung (40) nachgelagerte, unter Bildung eines zweiten Behandlungsspalts (53) mit einer zweiten Gegenwalze (52) angeordnete zweite Behandlungswalze (51) vorgesehen sind.

8. Vorrichtung nach Anspruch 7, **dadurch gekennzeichnet, dass** die Behandlungswalze (31, 51) als eine Stahlwalze und/oder das Gegenwerkzeug (32, 52) als durchbiegesteuerbare Walze ausgebildet ist.

9. Vorrichtung nach einem der Ansprüche 7 bis 8, **dadurch gekennzeichnet, dass** zum Trocknen der Warenbahn (W) zumindest eine Trocknungseinrichtung (60) vorgesehen ist.

10. Vorrichtung nach einem der Ansprüche 7 bis 9, **dadurch gekennzeichnet, dass** zum Abwickeln der Warenbahn (W) von einer ersten Bereitstellungseinrichtung (11) eine Warenabwickeleinrichtung (12), und zum Aufwickeln der Warenbahn (W) auf eine zweiten Bereitstellungseinrichtung (71) eine Warenaufwickeleinrichtung (72) vorgesehen sind.

11. Vorrichtung nach einem der Ansprüche 7 bis 10, **dadurch gekennzeichnet, dass** in Vorlaufrichtung (V) zwischen der Warenabwickeleinrichtung (12) und der ersten Applikationseinrichtung (20), zwischen dem ersten Behandlungsspalts (33) und der zweiten Applikationseinrichtung (40), zwischen dem zweiten Behandlungsspalts (53) und der Trocknungseinrichtung (60) und/oder zwischen der Trocknungseinrichtung (60) und der Warenaufwickeleinrichtung (72) eine Pendelwalze (15, 35, 55) zur Warenspannungseinstellung angeordnet ist.

12. Vorrichtung nach einem der Ansprüche 7 bis 11, **dadurch gekennzeichnet, dass** die Applikationseinrichtungen (20, 40) als Sprüheinrichtungen mit Sprühdüsen (21, 41) zum Wasser-Besprühen und/oder als Rotationsbefeuchter ausgebildet sind.

## Claims

1. Method for treating a textile material web (W) for reducing the gas-permeability of the material web (W), in which method the material web (W) comprising a first side (W1) of planar configuration and an opposite second side (W2) of planar configuration is transported in an advancing direction (V) and guided through at least one treatment gap (33, 53) formed by a treatment roller (31, 51) and a counter tool (32, 52), which is configured as a counter roller, wherein before passing the treatment gap (33, 53), water is applied to at least one of the two sides (W1, W2) of planar configuration of the material web (W), and the material web (W) is subsequently pressure treated in the treatment gap (33, 53) and is thermally treated on at least one of the two sides (W1, W2) of planar configuration, wherein in a first step, water is applied exclusively to the first side (W1) of the material web (W), and the material web (W) in a first treatment gap (33) is subsequently pressure treated and the first side (W1) is thermally treated and, in a downstream second step, water is applied exclusively to the second side (W2), and the material web (W) in a separate second treatment gap (53) is subsequently pressure treated and the second side (W2) is thermally treated.

2. Method according to Claim 1, **characterized in that**, before the first application of water, the material web (W) is received from a first supply installation (11), in particular from a first batch truck (10), or is acquired from an upstream installation.

3. Method according to one of the preceding claims, **characterized in that**, after the treatment in the treatment gap (33, 53), the material web (W) is dried in a drying step (4).

4. Method according to one of the preceding claims, **characterized in that**, in a further step, the material web (W) is wound onto a second supply installation (71), in particular a second batch truck (70).

5. Method according to one of the preceding claims, **characterized in that**, in at least one testing step (5), a gas-permeability value of the material web (W) is detected.

6. Method according to one of the preceding claims, **characterized in that**, at least after the treatment in the treatment gap (33, 53) and/or before the application of water, a tension value of the material web (W) in the advancing direction (V) is detected and/or controlled.

7. Apparatus for carrying out a method according to one of the preceding claims for treating a textile material web (W) in an advancing direction (V) for reducing the gas-permeability of the material web (W), comprising
- at least one installation for the application (20, 40) of water to at least one side (W1, W2) of planar configuration of the material web (W),
- at least one treatment roller (31, 51) which, while conjointly with a counter tool (32, 52), which is configured as a counter roller, forming a treatment gap (33, 53), is disposed downstream in the advancing direction (V) of the installation for the application of water (20, 40), wherein the treatment roller (31, 51) and/or the counter tool (32, 52) are/is temperature-controllable,
**characterized in that**, for the application of water exclusively to a first side (W1) of planar configuration of the material web (W), a first application installation (20) and a first treatment roller (31) which, while conjointly with a first counter roller (32) forming a first treatment gap (33), is disposed downstream in the advancing direction (V) of the first application installation (20) are provided; and for the application of water exclusively to a second side (W2) of planar configuration of the material web (W), a second application installation (40) and a second treatment roller (51) which, while conjointly with a second counter tool (52) forming a second treatment gap (53), is disposed downstream in the advancing direction (V) of the second application installation (40) are provided.

8. Apparatus according to Claim 7 **characterized in that** the treatment roller (31, 51) is configured as a steel roller and/or the counter tool (32, 52) is configured as a roller, in particular as a flexurally controllable roller.

9. Apparatus according to one of Claims 7 to 8, **characterized in that** at least one drying installation (60) is provided for drying the material web (W).

10. Apparatus according to one of Claims 7 to 9, **characterized in that** a material unwinding installation (12) is provided for unwinding the material web (W) from a first supply installation (11), and a material winding installation (72) is provided for winding the material web (W) onto a second supply installation (71).

11. Apparatus according to one of Claims 7 to 10, **characterized in that** a dancer roller (15, 35, 55) for setting the tension on the material is disposed in the advancing direction (V) between the material unwinding installation (12) and the first application installation (20), between the first treatment gap (33) and the second application installation (40), between the second treatment gap (53) and the drying installation (60), and/or between the drying installation (60) and the material winding installation (72).

12. Apparatus according to one of Claims 7 to 11, **characterized in that** the application installations (20, 40) are configured as spraying installations having spray nozzles (21, 41) for spraying water, and/or as rotary moistening apparatuses.

## Revendications

1. Procédé de traitement d'une nappe textile (W) pour réduire la perméabilité aux gaz de la nappe (W), dans lequel la nappe (W) comprenant un premier côté (W1) réalisé sous forme plate et un deuxième côté (W2) opposé réalisé sous forme plate est transportée dans une direction d'avance (V) et est guidée à travers au moins une fente de traitement (33, 53) formée par un rouleau de traitement (31, 51) et un contre-outil (32, 52) réalisé sous forme de contre-rouleau, de l'eau étant appliquée sur au moins l'un des deux côtés (W1, W2) réalisés sous forme plate de la nappe (W) avant le passage dans la fente de traitement (33, 53), et ensuite la nappe (W) étant traitée sous pression dans la fente de traitement (33, 53) et étant traitée en température sur au moins l'un des deux côtés (W1, W2) réalisés sous forme plate, de l'eau étant appliquée dans une première étape exclusivement sur le premier côté (W1) de la nappe (W) et ensuite la nappe (W) étant traitée sous pression dans une première fente de traitement (33) et le premier côté (W1) étant traité en température, et, dans une deuxième étape ultérieure, de l'eau étant appliquée exclusivement sur le deuxième côté (W2) et ensuite la nappe (W) étant traitée sous pression dans une deuxième fente de traitement séparée (53) et le deuxième côté (W2) étant traité en température.

2. Procédé selon la revendication 1, **caractérisé en ce qu'**avant la première application d'eau, la nappe (W) est reçue par un premier appareil de fourniture (11), notamment par un premier chariot à bobines (10), ou est prise en charge par un appareil situé en amont.

3. Procédé selon l'une quelconque des revendications précédentes, **caractérisé en ce qu'**après le traitement dans la fente de traitement (33, 53), la nappe (W) est séchée dans une étape de séchage (4).

4. Procédé selon l'une quelconque des revendications précédentes, **caractérisé en ce que**, dans une étape supplémentaire, la nappe (W) est enroulée sur un deuxième appareil de fourniture (71), notamment un deuxième chariot à bobines (70).

5. Procédé selon l'une quelconque des revendications précédentes, **caractérisé en ce que**, dans au moins une étape de contrôle (5), une valeur de perméabilité aux gaz de la nappe (W) est détectée.

6. Procédé selon l'une quelconque des revendications précédentes, **caractérisé en ce qu'**au moins après le traitement dans la fente de traitement (33, 53) et/ou avant l'application d'eau, une valeur de tension de la nappe (W) est détectée et/ou régulée dans la direction d'avance (V).

7. Dispositif pour la mise en œuvre d'un procédé selon l'une quelconque des revendications précédentes pour le traitement d'une nappe textile (W) dans une direction d'avance (V) pour réduire la perméabilité aux gaz de la nappe (W), comprenant
- au moins un appareil pour l'application (20, 40) d'eau sur au moins un côté (W1, W2) de la nappe (W) réalisé sous forme plate,
- au moins un rouleau de traitement (31, 51) agencé en aval de l'appareil d'application d'eau (20, 40) dans la direction d'avance (V), en formant une fente de traitement (33, 53) avec un contre-outil (32, 52) réalisé sous forme de contre-rouleau, le rouleau de traitement (31, 51) et/ou le contre-outil (32, 52) pouvant être thermorégulés,
**caractérisé en ce qu'**il est prévu, pour l'application d'eau exclusivement sur un premier côté (W1) réalisé sous forme plate de la nappe (W), un premier appareil d'application (20) et un premier rouleau de traitement (31) agencé en aval du premier appareil d'application (20) dans la direction d'avance (V), en formant une première fente de traitement (33) avec un premier contre-rouleau (32), et pour l'application d'eau exclusivement sur un deuxième côté (W2) réalisé sous forme plate de la nappe (W), un deuxième appareil d'application (40) et un deuxième rouleau de traitement (51) agencé en aval du deuxième appareil d'application (40) dans la direction d'avance (V), en formant une deuxième fente de traitement (53) avec un deuxième contre-rouleau (52).

8. Dispositif selon la revendication 7, **caractérisé en ce que** le rouleau de traitement (31, 51) est réalisé sous la forme d'un rouleau en acier et/ou le contre-outil (32, 52) est réalisé sous forme de rouleau dont la flexion peut être commandée.

9. Dispositif selon l'une quelconque des revendications 7 à 8, **caractérisé en ce qu'**il est prévu au moins un appareil de séchage (60) pour sécher la nappe (W).

10. Dispositif selon l'une quelconque des revendications 7 à 9, **caractérisé en ce qu'**il est prévu un appareil de déroulement de nappe (12) pour dérouler la nappe (W) d'un premier appareil de fourniture (11), et un appareil d'enroulement de nappe (72) pour enrouler la nappe (W) sur un deuxième appareil de fourniture (71).

11. Dispositif selon l'une quelconque des revendications 7 à 10, **caractérisé en ce qu'**un rouleau pendulaire (15, 35, 55) est agencé dans la direction d'avance (V) entre l'appareil de déroulement de nappe (12) et le premier appareil d'application (20), entre la première fente de traitement (33) et le deuxième appareil d'application (40), entre la deuxième fente de traitement (53) et l'appareil de séchage (60) et/ou entre l'appareil de séchage (60) et l'appareil d'enroulement de nappe (72) pour régler la tension de la nappe.

12. Dispositif selon l'une quelconque des revendications 7 à 11, **caractérisé en ce que** les appareils d'application (20, 40) sont réalisés sous forme d'appareils de pulvérisation avec des buses de pulvérisation (21, 41) pour la pulvérisation d'eau et/ou sous forme d'humidificateurs rotatifs.
